# EUROPEAN PATENT APPLICATION

(11) **EP 4 443 761 A1**
(43) Date of publication of application: **09.10.2024**
(21) Application number: 23166830.2
(22) Date of filing: 05.04.2023
(51) Int. Cl.: H04B 7/06, H04B 7/08, H04W 72/23, H04L 5/00, H04W 72/044

(54) **CELL AND BEAM ACTIVATION FOR L1 MEASUREMENT**

(71) Applicant: Panasonic Intellectual Property Corporation of America, Torrance, CA 90504 (US)
(72) Inventor: KUANG, Quan, 63225 Langen (DE); SUZUKI, Hidetoshi, Osaka, 571-8501 (JP)
(74) Representative: Grünecker Patent- und Rechtsanwälte PartG mbB

(57) **Abstract**

The disclosure relates to a user equipment, a base station device, and respective methods for a user equipment and a base station. More specifically, the user equipment comprises a receiver and circuitry. The receiver, in operation, receives a first indication specifying one or more measurement objects, wherein each measurement object includes one or more beams. The circuitry, in operation, obtains a set of measurement objects, wherein the set of measurement objects includes the one or more measurement objects, obtains a subset of measurement objects out of the set of measurement objects based on the received first indication, and performs a beam measurement of a beam included in a measurement object out of the obtained subset of measurement objects.

## Description

### BACKGROUND

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitate efficient operation of the communication system as well as particular devices pertaining to the system.

### SUMMARY

One non-limiting and exemplary embodiment facilitates for a user equipment to perform improved beam measurement.

In an embodiment, the techniques disclosed here feature an apparatus (e.g. a user equipment, UE). The apparatus comprises a receiver and circuitry. More specifically, the user equipment comprises a receiver and circuitry. The receiver, in operation, receives a first indication specifying one or more measurement objects, wherein each measurement object includes one or more beams. The circuitry, in operation, obtains a set of measurement objects, wherein the set of measurement objects includes the one or more measurement objects, obtains a subset of measurement objects out of the set of measurement objects based on the received first indication, and performs a beam measurement of a beam included in a measurement object out of the obtained subset of measurement objects.

It should be noted that general or specific embodiments may be implemented as a system, a method, an integrated circuit, a computer program, a storage medium, or any selective combination thereof. For instance, an integrated circuit can control a process of a UE or network node.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a non-roaming scenario;
- **Fig. 6**: illustrates a split-gNB architecture, where a gNB is split into a gNB-central unit and one or more gNB-distributed units,
- **Fig. 7**: illustrates a simplified and exemplary implementation of a set of synchronization signal blocks distributed in a half-frame,
- **Fig. 8**: illustrates several beams and the corresponding SSB index, and how the beams are transmitted by the gNB in a beam-sweeping manner,
- **Fig. 9**: illustrates a simplified signaling diagram for an intra-DU lower-layer cell switch,
- **Fig. 10**: is a block diagram illustrating an exemplary functional structure of a base station and a user equipment;
- **Fig. 11**: is a block diagram illustrating an exemplary functional structure of the circuitry handling of measurement object obtaining that may be included in the exemplary user equipment of Fig. 10;
- **Fig. 12**: is a block diagram illustrating an exemplary functional structure of the measurement object configuration circuitry that may be included in the exemplary base station equipment of Fig. 10;
- **Fig. 13**: is a flow chart illustrating exemplary steps performed by a user equipment;
- **Fig. 14**: is a flow chart illustrating exemplary steps performed by a base station;
- **Fig. 15**: exemplarily illustrates a MAC-CE as first indication, specifying activated SSB beams;
- **Fig. 16**: exemplarily illustrates a MAC-CE as first indication, specifying activated CSI-RS beams;
- **Fig. 17**: exemplarily illustrates a MAC-CE as first indication, specifying activated or deactivated cells;
- **Fig. 18**: exemplarily illustrates a MAC-CE as first indication, specifying activated or deactivated cells and including an indication for activation or deactivation.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

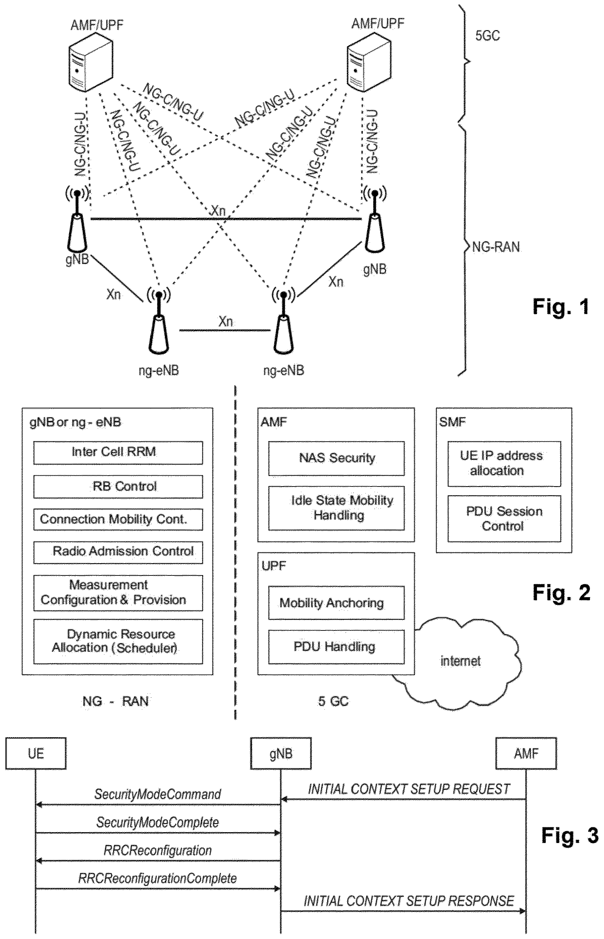

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter *µ* (in LTE there is only a 15 kHz subcarrier spacing, corresponding to *µ* = 0 in NR). The types NR numerology is summarized in 3GPP TS 38.211, v 15.7.0.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from theAMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UUDL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation *configuration.*

### Usage Scenarios of IMT for 2020 and beyond

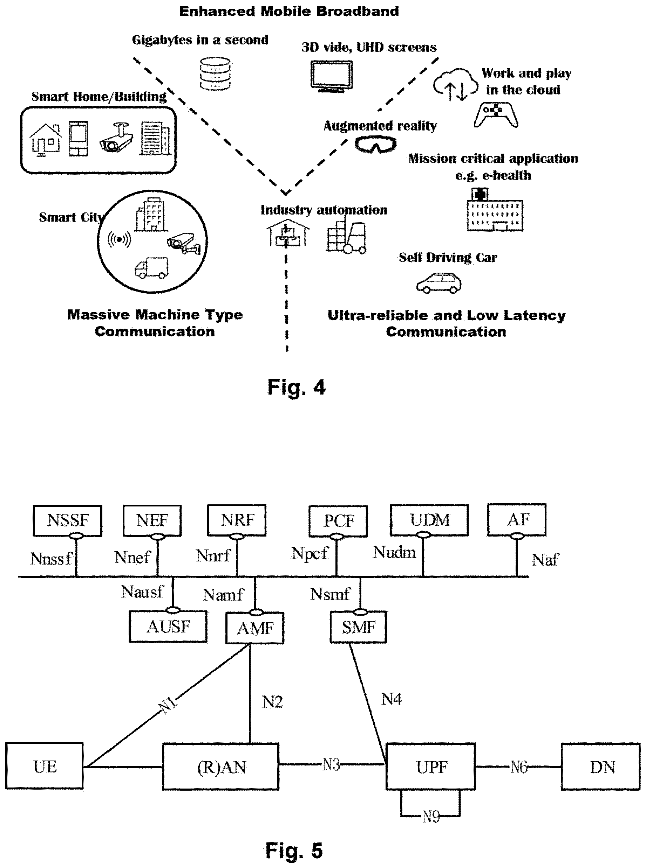

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig.2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g., as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see e.g., 3GPP TS 23.501 e.g., v16.9.0, section 4.2.3, see also v17.5.0 or v18.0.0). An Application Function (AF), e.g., an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and circuitry, which, in operation, performs the services using the established PDU session.

### Transmission Configuration Indicator states and Quasi-Co-Location

As per 3GPP TS 38.214: "Physical layer procedures for data (Release 17)", v. 17.3.0, September 2022, two reference signals can have a quasi-co-located, QCL, relationship. Two antenna ports are said to be quasi co-located if properties of the channel over which a symbol on one antenna port is conveyed can be inferred from the channel over which a symbol on the other antenna port is conveyed.

In 5G NR systems, a transmission configuration indication (TCI) state is used to establish the quasi co-location (QCL) connection between a target reference signal (RS) and a source RS. The antenna ports QCL types are defined below:

| Type | Description |
|---|---|
| QCL-TypeA | Doppler shift, Doppler spread, average delay, delay spread |
| QCL-TypeB | Doppler shift, Doppler spread |
| QCL-TypeC | Doppler shift, average delay |
| QCL-TypeD | Spatial Rx parameter |

TCI states are configured for PDCCH, PDSCH and channel state information reference signals (CSI-RS) in order to convey the QCL indication for the respective RS. In frequency range 1 (FR1, below 7.125 GHz) QCL Types A-C and in frequency range 2 (FR2, above 24.250 GHz) QCL types A-D are applicable. The QCL Type D for FR2 indicates that PDCCH/PDSCH/CSI-RS is transmitted with the same spatial filter as the reference signal associated with that TCI. In FR2, the network can indicate a transmit beam change for PDSCH or PDCCH by switching the TCI state.

Each TCI state can include a TCI state identifier, TCI state ID, and a RS set, or one or more individual RS(s), which are used for QCL reference. Each RS within a TCI state can be associated with a set of one or more Tx (transmit) and/or Rx (receive) beams.

### Split gNB architecture

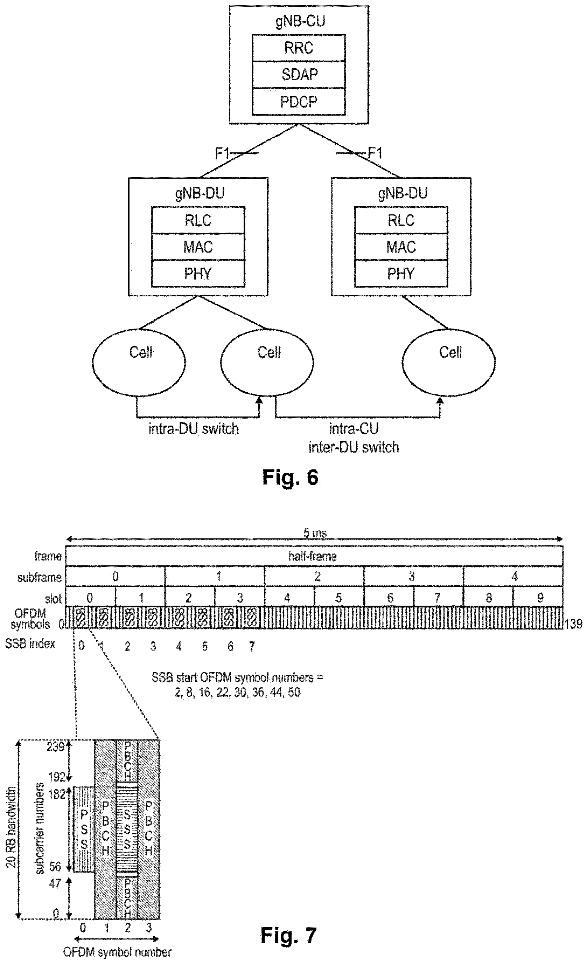

In the 3GPP standard, a gNB can be split into a gNB-CU (Central Unit) and one or more gNB-DUs (Distributed Units). This is illustrated in **Fig. 6****.**

The gNB-CU is a logical node that provides support for the higher layers of the protocol stack such as SOAP, PDCP and RRC. On the other hand, the gNB-DU is a logical node that provides support for the lower layers of the protocol stack such as RLC, MAC and Physical layer. Also, note that SDAP layer will not be present if the CU is connected to a 4G Core network as we should have 5G core network to support SOAP.

Therefore, the PHY and MAC layers are terminated at the gNB-DU, while Layer 3 (RRC) is terminated at the gNB-CU.

There is a single CU for each gNB, i.e. one gNB-DU is connected to only one gNB-CU. Alternatively, for resiliency, a gNB-DU may be connected to multiple gNB-CUs. One gNB-CU may control multiple gNB-DUs, for example more than 100 gNB-DUs can be connected to one gNB-CU. Each gNB-DU is able to support one or more cells, so one gNB can control hundreds of cells unlike the 4G BTS. One cell is supported by only one gNB-DU.

Also, note that the interface between CU and DU is named F1 and as per 3GPP, it should be an open interface. For NG-RAN, the NG and Xn-C interfaces for a gNB consisting of a gNB-CU and gNB-DUs, terminate in the gNB-CU. For EN-DC, the S1-U and X2-C interfaces for a gNB consisting of a gNB-CU and gNB-DUs, terminate in the gNB-CU. The gNB-CU and connected gNB-DUs are only visible to other gNBs and the 5GC as a gNB.

The gNB-CU/DU architecture is specified in more detail e.g. in 3GPP TS 38.401 v17.3.0, e.g. section 6.1. The F1 interface is specified in more detail e.g. in 3GPP TS 38.473 v17.3.0.

### Synchronization Signal Block measurement timing configuration - SMTC - PSS/SSS, PBCH

NR has introduced the so-called synchronization signal block, SS block (SSB), which comprises a Primary Synchronization Signal (PSS), a Secondary Synchronization Signal (SSS), and a Physical Broadcast CHannel (PBCH) (in fact PBCH DMRS and PBCH data). The PSS and SSS can be used by UEs to find, synchronize to and identify a network. The PBCH carries a minimum amount of system information including an indication where the remaining broadcast system information is transmitted.

In LTE, these three signals were also used, the PSS, SSS, and PBCH, although not as being part of one SSB. The three SSB components are always transmitted together in NR, e.g. they have the same periodicity. A given SSB may be repeated within an SS burst set, which can be potentially used for a gNB beam-sweeping transmission. The SS burst set may be confined to a particular time period, such as a 5ms window (half-frame). For initial cell selection, the UE may assume a default SS burst set periodicity of 20 ms.

The 5G NR PSS is a Physical Layer specific signal to identify the radio frame boundary and is type of an m-sequence. The 5G NR SSS is also a Physical-Layer specific signal to identify the subframe boundary and is also an m-sequence. The PSS/SSS sequence is composed of complex values used by each element/sample of the sequence. Information on the current exemplary 5G implementation of the PSS and SSS is available from 3GPP TS 38.211 v17.4.0 sections 7.4.2.2 and 7.4.2.3, including the respective sequence generation and mapping to physical resources.

The time-frequency structure of an SS/PBCH block, carrying the SSS is described in the TS 38.211 section 7.4.3.1. In such an exemplary 5G implementation, in the time domain, an SS/PBCH block consists of 4 OFDM symbols, numbered in an increasing order from 0 to 3. The distribution of the PSS, SSS and PBCH signals within the SS/PBCH block is defined by Table 7.4.3.1-1.

In the frequency domain, an SS/PBCH block consists of 240 contiguous subcarriers, indexed with 0 to 239. The exact subcarriers to be used for each PSS, SSS and PBCH signal within the SS/PBCH block is also defined by Table 7.4.3.1-1.

A simplified and exemplary illustration of the SSB according to the above definitions is illustrated in **Fig. 7****,** which shows at the bottom part the PSS, SSS, and PBCH in the time and frequency domain.

The timing (OFDM symbols) at which the SS-blocks (see Fig. 7) are transmitted by the gNB can be defined differently. In particular, the first symbol indexes (within each half-frame with an SSB) with which a candidate SSB starts is determined according to 3GPP 38.213 v17.4.0, section 4.1 "Cell search". An example set of SSBs is illustrated in Fig. 7, assuming start OFDM symbols of 2, 8, 16, 22, 30, 36, 44, and 50 (in the case of SCS=30 kHz, and frequency > 3 GHz), wherein the relevant OFDM symbol numbering starts with 0 in a half frame. The number of SSBs in a set of SSBs can also be limited to a maximum Lmax. In one example, the SSB set can comprise 4, 8 or 64 SSBs.

The candidate SS/PBCH blocks in a half frame (e.g. termed a set of SSBs) are indexed in an ascending order in time from 0 to *Lmax* - 1. Correspondingly, each SSB within a set of SSBs is assigned a unique number (starting from 0 and increasing by 1).

The SSB set illustrated in Fig. 7 shows a case where all the possible candidate SSBs are indeed transmitted by the base station. However, it is not required to transmit all SSBs. Rather, the gNB, based on some requirements, may select only some of those SSBs within a set of SSBs and transmit those. The SSBs that are actually transmitted by the SSB can be called the SSB pattern. The SSB pattern has basically the same characteristics as the corresponding set of SSBs, including the periodicity.

The gNB informs the UE about the SSB pattern, e.g. which SSBs are in fact transmitted and which are not. This can be done e.g. by the gNB transmitting an SSB bitmap, which defines the SSB pattern, wherein each bit of the SSB bitmap relates to one SSB and identifies whether said SSB is transmitted or not. The length of the SSB bitmap depends on the applicable SSB set, e.g. 4, 8, or 64 bits.

In brief, a set of candidate SSBs is configured for use by the gNB in the cell. Furthermore, among the set of candidate SSBs, the gNB can then select either all or fewer candidate SSBs to actually transmit, called an SSB pattern.

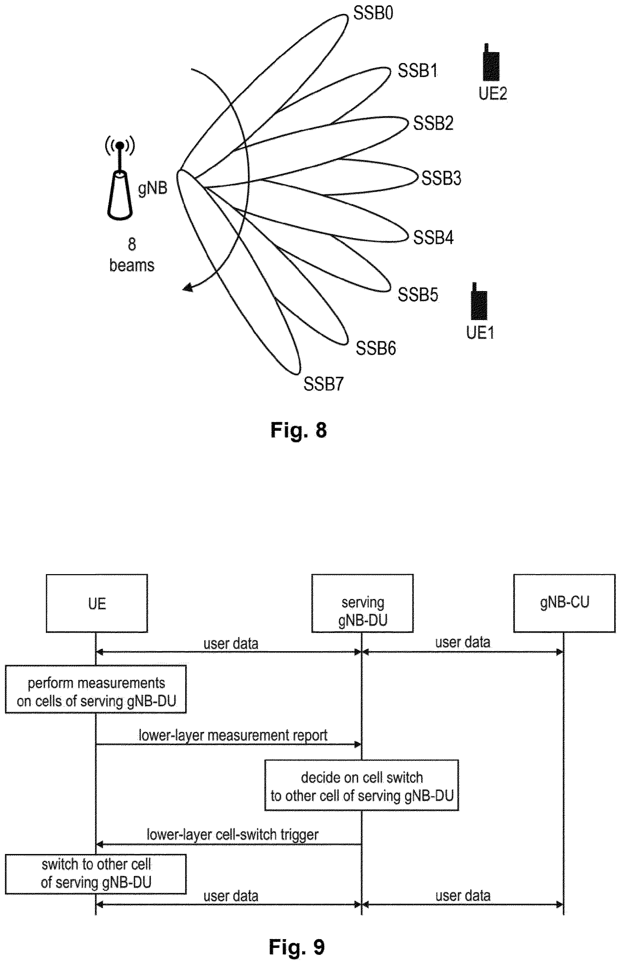

All the SSBs can be transmitted with all beams in the system. Alternatively, the SSBs can be transmitted in different beams, e.g. when SSB beamforming is enabled. In that case, each SSB is transmitted on a different spatial beam, as illustrated in **Fig. 8****.** Similar to the exemplary assumption of Fig. 7, there are 8 SSBs (SSB0-SSB7) which can respectively be transmitted in a different beam, each beam being transmitted in a different beam direction. Therefore, a beam-sweeping form of transmission of the SSBs is achieved; put differently, the sweeping transmission of the beams (and SSBs) is time-division multiplexed and occurs at different times. The two UEs, UE1 and UE2, will receive a different SSB at different times. Each beam has a beam index, e.g. where the beam index corresponds to the SSB index that is transmitted via said beam.

The UE uses the SSBs, and particularly the SSB signals (e.g. the PSS, SSS, PBCH) in different mechanisms, such as for serving cell measurements, time / frequency synchronization etc.

### Beam management

Beam management is a set of Layer 1 (PHY) and Layer 2 (MAC) procedures to establish and retain an optimal beam pair for good connectivity. A beam pair e.g. consists of a transmit beam and a corresponding receive beam in one link direction.

Before a UE can communicate with the network, it must perform cell search and selection procedures and obtain initial cell synchronization and system information. The first steps in that process are acquiring frame synchronization, finding out the cell identity and decoding the MIB and SIB1.

In the case of a multi-antenna system that transmits multiple beams, detecting the beams from the gNB is also a part of the initial procedure (e.g. where the UE normally detects all the beams in the search space).

Beam management can be categorized into three main procedures:
- initial beam establishment,
- beam adjustment (also called beam tracking and refining), and
- beam failure recovery, details of which will be described below.
These procedures will be briefly explained below.

### Initial beam establishment

Initial beam establishment includes the procedures and functions by which a beam pair is initially established in the downlink (DL) and uplink transmission (UL) directions, for example, when a connection is established. In the current 5G NR standard, this is done via beam sweeping, where different SSBs that are associated with different transmission, Tx, beams are transmitted in different OFDM symbols.

During beam sweeping, a gNB transmits beams in all directions in a burst at regularly defined intervals. Whenever a UE is synchronizing with the network, it reads the synchronization signal block, SSB, and extracts the primary synchronization signal, PSS, the secondary synchronization signal, SSS, the physical broadcast channel, PBCH, and the demodulation reference signal, DMRS.

A single SSB spans four OFDM symbols in time domain and 240 subcarriers in frequency domain (20 resource blocks(RB)) (see Fig. 7). Each SSB corresponds to a specific beam, beamformed in a different direction. A group of SSBs forms one SS burst set that spans a 5ms window. The SS burst is repeated periodically with a period of 20 ms, wherein the maximum number of SSBs in a SS burst set is dependent on the operating frequency range.

The UE can then search for the strongest DLTx beam, e.g. by adjusting the corresponding DL reception, Rx, beam at the UE side as well, and then report the selection via a corresponding RACH occasion and preamble to the gNB. In this way, the initial beam pair is established, which may remain valid after a connection is set up until a new beam indication is received by UE.

### Beam adjustment

After the initial beam pair has been established, the beam pair may be constantly adjusted, in order to account for a movement of the UE and/or a change of the environment. This may be referred to as beam adjustment. In addition, beam management can also include refining the beam shape, for example using a narrower CSI-RS beam compared to a relatively wider SSB beam used for initial beam establishment.

The UE measures the beam strength by measuring received signal power. In idle mode, it is based on the synchronization signals, and in connected mode, it can be based on the channel state information reference signal, CSI-RS, in DL and sounding reference signal, SRS, in UL. The UE searches for the best beam periodically using predefined threshold criteria defined by the gNB and identifies the beam that has highest reference signal received power, RSRP. The UE may then perform a beam reporting procedure.

As beam adjustment does not happen simultaneously at the gNB and UE, one beam per procedure - identified by their index - is the outcome that may be used for UL or DL communication. The gNB may use information and recommendations from the UE to enhance beam adjustment. Transmission of control signaling and data may benefit from the beams selected in the process, because beam adjustment aims at improving the link quality based on ever-changing radio channel conditions. The gNB is in charge of deciding which UL Rx and DL Tx beams it is going to use and of indicating the UE about them. Upon knowing the beams the gNB is using, the UE is able to select their own UL Tx and DL Rx beams.

### Beam failure recovery

Beam failure may happen if the beam cannot be tracked by the beam adjustment procedure described above. This can be the case, for example, when the current beam pair is suddenly blocked unexpectedly, and the beam tracking function cannot react quickly enough. Once a beam failure has occurred, beam recovery typically requires the following steps:
- beam-failure detection,
- candidate-beam identification,
- recovery-request transmission, and
- network response to the beam-recovery request.

For example, in the case of beam failure due to a poor channel condition, the beam recovery process is triggered to get back a new beam. The UE monitors the reference signal(s) and identifies the beam failure once the failure trigger conditions are met. The UE chooses the next best beam for sending in a random access (RA) preamble when the beam failure happens. If a first attempt of the RA fails, it sweeps to another beam for another RA procedure. The RA preamble is sent in the PRACH. Finally, the UE receives a downlink resource allocation and an uplink grant on the physical downlink control channel, PDCCH.

### Beam measurement and reporting

General operations performed during one or more of said main procedures may involve one or more of:
- *beam sweeping,* i.e., covering a spatial area with a set of beams transmitted and received according to pre-specified intervals and directions,
- *beam measurement,* i.e., the evaluation of the quality of the received signal at the gNB or at the UE,
- *beam determination,* i.e., the selection of the suitable beam or beams either at the gNB or at the UE, according to measurements obtained with the beam measurement procedure, and
- *beam reporting,* i.e., a procedure used by the UE to send beam quality and beam decision information to the gNB.
In brief, beam reporting involves that the UE measures a set of reference signals (e.g. SSB, or CSI-RS), corresponding to different downlink Tx beams. The UE then reports these measurements to the network (e.g. the serving gNB). Based on the received measurements, the network can then e.g. decide a suitable downlink Tx beam for the UE.

The measurement and reporting can be e.g. based on the CSI reporting framework, which generally can be considered to involve two parts, one for configuration and another one for the triggering of the CSI reporting.

Further details regarding the measurement and reporting are described in the following section.

### Layer-1-Layer-2-triggered mobility (LTM)

When the UE moves from the coverage area of one cell to another cell, at some point a serving cell change needs to be performed. According to one possibility, serving cell change is triggered by L3 measurements and is done by RRC signalling triggered Reconfiguration with Synchronisation for change of PCell and PSCell, as well as release add for SCells when applicable. Such a procedure may involve complete L2 (and L1) resets, leading to longer latency, larger overhead and longer interruption time than beam switch mobility.

In the ongoing 3GPP Rel. 18 work on mobility enhancements, supporting Layer-1-Layer-2-(also termed lower-layer) triggered mobility (LTM) is one of the topics. The UE is firstly configured by the RRC (L3) with a set of candidate cells. Then, L1- or L2 signaling (e.g. a MAC CE (and/or possibly a DCI) is used to trigger the switch of the UE's serving cell among the candidate cells without RRC reconfiguration. Put differently, to facilitate a sequential cell switch, the cell switch shall be prepared in a manner that no RRC reconfiguration is needed for the UE after the cell switch, regardless of which candidate cell becomes the new serving cell. The goal is to reduce latency, overhead and interruption time for the serving cell change. Intra-DU and intra-CU inter-DU cells switches are both within the scope. **Fig. 6** illustrates the intra-DU switch between two cells of the same gNB-DU as well as the inter-DU switch between two cells of different gNB-DUs.

**Fig. 9** is a simplified and exemplary message exchange for an intra-DU LTM cell switch for according to the ongoing 3GPP Rel. 18 work. Correspondingly, it is exemplary assumed that the gNB-DU controls a plurality of cells, including the current serving cell of the UE. The gNB-DU is in connection with a gNB-CU.

As apparent therefrom, the cell switch is decided based on lower-layer (e.g. Layer 1 RSRP) measurements performed at the UE and reported to the gNB-DU (see "lower-layer measurement report"). In more detail, the UE measures reference signals from one or more candidate cells of the gNB-DU and reports the results to the gNB-DU. The gNB-DU or gNB-CU can use the received measurement results for determining whether to execute LTM to a candidate target cell or not. The lower-layer cell-switch trigger is transmitted to the UE, such that the UE can perform the switch from the current cell to another cell of the gNB-DU.

The benefit achieved by performing the measurement and reporting by Layer 1 is the low latency.

In the current L1 beam measurement framework, the measurement object, which refers to a set of RSs, e.g. SSBs and/or CSI-RS is semi-statically configured by RRC. If the same mechanism is used for LTM, it may require frequent RRC reconfiguration to change the measurement object when the candidate cell is changed, causing signaling overhead and latency. If the number of candidate cells pre-configured by RRC is increased, it may increase UE measurement effort, e.g. to some extend beyond the UE capability.

### Lower-layer measurement report

As presented above, the lower-layer mobility procedure is based on the UE performing measurement and reporting the measurement results to the serving gNB (serving gNB-DU and/or serving gNB-CU) of the UE. To said end, the UE can be configured by its serving gNB with the necessary parameters and information. For example, the configuration of the UE for performing measurements and reporting the measurement results involves conceptually:
- The quantity or a set of quantities to be reported.
- The downlink resources for each cell on which measurements should be performed in order to derive the quantity or quantities to be reported.
- How the actual reporting is to be carried out, e.g. reporting timing and uplink channel to use for the reporting.

According to one example, the measurement and reporting can be e.g. based on the CSI reporting framework, which generally can be considered to involve two parts, one for configuration and another one for the triggering of the CSI reporting.

The *CSI-MeasConfig* IE is the highest-level IE for CSI configuration and configures not just L1-RSRP-related measurement/reporting for beam management, but also conventional CSI-related measurement/reporting (such as CQI) to determine proper MIMO precoding, modulation and coding, etc.

Mainly three types of lists are configured by the *CSI-MeasConfig* IE:
1) List of RS resource sets
   - Each RS resource set in the list contains one or multiple RS resources. E.g. multiple CSI-RS resources can be configured e.g. by a *NZP-CSI-RS-Resource* IE and then grouped into a RS resource set by a *NZP-CSI-RS-ResourceSet* IE. Other possible RS resource are defined by the lEs *CSI-IM-Resource,* and *SSB-Index.*
2) List of *CSI-ResourceConfig* lEs
   - Different *CSI-ResourceConfig* in the list can contain one or more different RS resource sets, chosen from List element 1). This may include *NZP-CSI-RS-ResourceSet, CSI-IM-ResourceSet,* and/or *CSI-SSB-ResourceSet,* respectively identified by suitable IDs (see e.g. *NZP-CSI-RS-ResourceSetId, CSI-IM-ResourceSetId,* and/or *CSI-SSB-ResourceSetId)*
3) List of CSI-ReportConfig lEs.
   - Different *CSI-ReportConfig* in the list configures different CSI report instance. This is the Information Element which links the reporting configuration of this *CSI-ReportConfig* (such as by PUCCH or PUSCH) to the measurement resource sets (i.e. one *CSI-ResourceConfig* in the above List element 2). *CSI-ResourceConfigID,* being included in the *CSI-ReportConfig* IE, identifies a *CSI-ResourceConfig* IE to be used.

Measurements and reporting can be carried out on a periodic, semi-periodic or aperiodic basis. The measurements results are reported by the UE to the gNB, e.g. as uplink control information on the PUCCH or the PUSCH. In one 5G compliant example, the CSI reporting is performed by the UE based on the definitions given in 3GPP TS 38.212 v17.4.0, in section 6.3.

In present 3GPP 5G systems, there are two types of reference signals that can be used for the measurements, the SSB (see above mentioned *SSB-Index*) and the CSI-RS (Channel State Information-Reference Signals; see above *NZP-CSI-RS-Resource* IE and *CSI-IM-Resource* IE). The SSB is always transmitted by the network and is not specific to a UE and is thus unflexible. For instance, the SSB can be used in connection with a comparatively wide beam. On the other hand, the CSI-RS can be specifically configured for a UE, and is quite flexible regarding when and how often it is transmitted (time domain) and regarding the frequency-domain resources. The CSI-RS can be used in connection with a comparatively narrow beam, because it can be configured for only one or a few UEs.

There are several reporting components of CSI in 5G NR (i.e. several different types of CSI), e.g. based on 3GPP TS 38.214 - section 5.2.1 thereof:.
- CQI (Channel Quality Information)
- PMI (Precoding Matrix Indicator)
- CRI (CSI-RS Resource Indicator)
- SSBRI (SS/PBCH Resource Block Indicator)
- LI (Layer Indicator)
- RI (Rank Indicator)
- L1-RSRP, and/or
- Capability Index

One or more or a combination of different metrics can be reported by the UE. Generally, the metrics can be grouped into two types:
- L1-RSRP-related quantities (e.g. cri-RSRP and ssb-Index-RSRP, see later IE *CSI-Report Config)*
- CSI-related quantities (e.g. the rest from the IE *CSI-Report Config*)

The L1-RSRP-related quantities are new ones introduced for the first time in NR (Rel-15), and one of their purposes is to facilitate beam management. By contrast, the CSI-related quantities (such as CQI) are traditional ones, existing in LTE already. Those traditional CSI-related quantities can be used by the base station to choose e.g. the proper MIMO precoding, modulation and coding size, etc. to match the channel condition.

An exemplary implementation follows current definitions of the 5G 3GPP standards, such as defined in 3GPP TS 38.331, and may involve e.g. the following Information Elements (IE):
*CellGroupConfig, CSI-MeasConfig, CSI-ReportConfig, CSI-ResourceConfig, NZP-CSI-RS-Resource,* and *NZP-CSI-RS-ResourceSet.*

In brief, the measurement and reporting for the LTM can be based on the CSI reporting framework of 5G. In particular, the Information Element (IE) *CSI-MeasConfig* and the Information Element *CSI-ReportConfig* indicate parameters of the CSI reporting framework usable by the UE to measure and then report the measurement results.

One possible following sequence of lEs for defining measurement and report according to the CSI framework includes:
- *CellGroupConfig* IE
   ∘ the *ServingCellConfig* IE of *SpCellConfig* or of *SCellConfig*
      ▪ *CSI-MeasConfig* IE
         - *CSI-ResourceConfig* IE
            ∘ *NZP-CSI-RS-ResourceSet*
               ▪ *NZP-CSI-RS-Resource*
            ∘ *CSI-SSB-ResourceSet*
               ▪ *SSB-Index*
            ∘ *CSI-IM-ResourceSet*
               ▪ *CSI-IM-Resource*
         - *CSI-ReportConfig* IE

Details for said framework are provided, for example, in 3GPP TS 38.331, section 6.3.2.

### Terminology

In the following, UEs, base stations, and respective procedures to meet these needs will be described for the new radio access technology envisioned for the 5G mobile communication systems, but which may also be used in previous LTE-based mobile communication systems or future (e.g. 6G) mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be gNB in a Non-Terrestrial Network (NTN) NR system.

Communication between the UE and the base station is typically standardized and may be defined by different layers, such as PHY, MAC, RRC etc. (see above background discussion).

### Embodiments

In general, as already indicated above, it may be desirable to improve the efficiency of indicating measurement objects to a UE, e.g. for LTM.

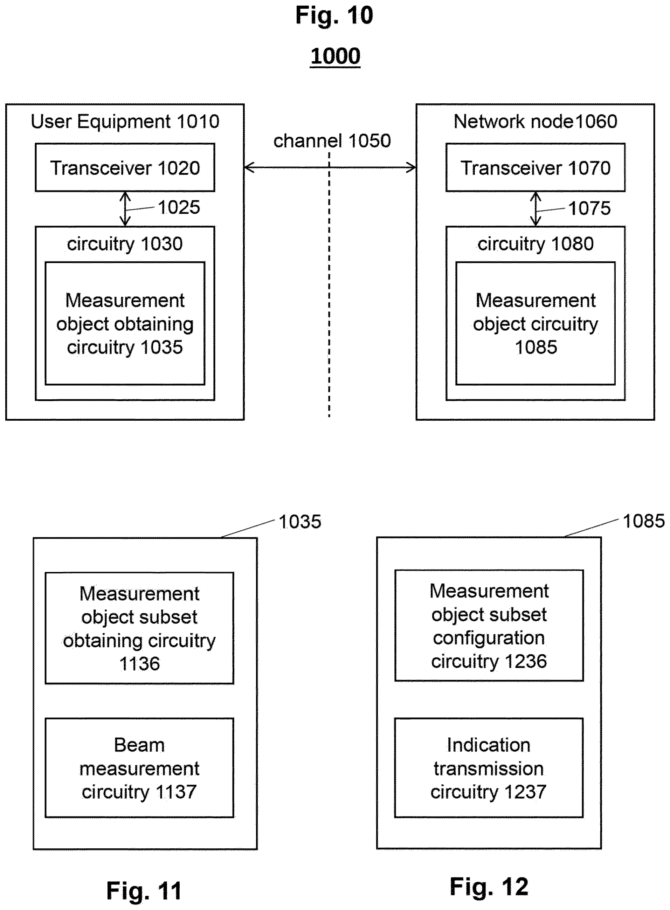

The present disclosure provides a network node and a user equipment as well corresponding methods and programs. For instance, an integrated circuit can control a process of a UE or base station. As illustrated in **Fig. 10****,** user equipment 1010 and network node 1060 may communicate with each other over a wireless channel in a wireless communication system. For instance, the user equipment may be a NR user equipment, and the network node may be a base station or scheduling node such as a eNB, or a NR gNB, in particular a gNB in a Non-Terrestrial Network (NTN) NR system. An example of such communication system is illustrated in Fig. 10. The communication system 1000 may be a wireless communication system in accordance with the technical specifications of 5G, in particular a NR communication system. However, the present disclosure is not limited to 3GPP NR and may also be applied to other wireless or cellular systems such as NTNs.

Fig. 10 illustrates a general, simplified and exemplary block diagram of a user equipment 1010 (also termed communication device) and a network node 1060(e.g., a base station 1060 such as an eNB/gNB). However, in general, a scheduling device may also be a terminal in case of a sidelink connection between two terminals. Moreover, in particular with respect to the use cases of URLLC; eMBB, and mMTC, the user equipment 1010 may also be a sensor device, a wearable device, or a connected vehicle, or a controller of an automated machine in an industrial factory. Further, a user equipment 1010 may be able to function as a relay between network node 1060 and another communication device (e.g. the disclosure is not limited to communication "terminals" or user "terminals").

The UE 1010 and eNB/gNB 1060 may be in communication with each other over a (wireless) physical channel 1050 respectively using their transceivers 1020 (UE side) and 1070 (network node side). Together, the network node 1060 and the terminal 1010 form the communication system 1000. The communication system 1000 may further include other entities such as those shown in Fig. 1.

As shown in Fig. 10 (left-hand side), according to a first exemplary embodiment, a user equipment (UE) 1010 is provided. The UE 1010 comprises a receiver and circuitry 1030. The receiver may be included in the transceiver 1020.

The receiver, in operation, receives a first indication specifying one or more measurement objects, wherein each measurement object includes one or more beams.

A measurement object includes, for example, (i) a cell including one or more beams, (ii) a set of beams, (iii) a beam, or (iv) any combination thereof. For example, a measurement object may be a set of SSB beams and/or a set of CSI-RS beams. Such beams may be represented, for example, by a respective RS ID, or a TCI state ID. Such a TCI state ID points to a SSB or CSI-RS as a QCL source. Further details are disclosed in section *Transmission Configuration Indicator states and Quasi-Co-Location.*

The receiving of the first indication may include, for example, the receiving of a MAC-CE message specifying one or more measurement objects. In other words, the first indication may be said MAC-CE message specifying one or more measurement objects. However, the present invention is not limited to a MAC-CE message. In general, any other message suitable for specifying the set of measurement objects may be used, e.g. other layer signaling such as L1 (PDCCH) signaling or RRC signaling may be used. For example, a higher-layer signaling, e.g. RRC signaling, for the indication of measurement objects may have a smaller size compared to a higher layer message, e.g. a RRC message, for a full configuration of the measurement objects.

Moreover, the circuitry 1030, in operation, obtains a set of measurement objects. The set of measurement objects includes the one or more measurement objects, which are indicated by the first indication. For example, such set of measurement objects may be obtained by receiving an additional indication, e.g. a higher layer indication, e.g. an RRC message, where the indication may indicate PCI (Physical Cell ID) or logical Cell ID, time domain configuration (e.g. SMTC or periodicity and SSB position in burst), frequency domain location (e.g. center frequency), and SCS (subcarrier spacing). As another example, the UE 1010 may obtain a set of measurement objects by performing a blind detection of available measurement objects, e.g. SSB beams. In other words, the UE 1010 may sense or detect the presence of a signal, such as an SSB beam, without prior knowledge of the signal characteristics or channel information. As further example, the detection of available measurement objects may be aided by some assistance information such as one or more of the following: PCI or logical Cell ID, time domain configuration (e.g. SMTC or periodicity and SSB position in burst), frequency domain location (e.g. center frequency), and SCS.

In addition, the circuitry 1030, in operation, obtains a subset of measurement objects out of the set of measurement objects based on the received first indication. Such a subset of measurement objects may include, for example, one or more cells, one or more beams or combinations thereof. In other words, the UE 1010 may select a subset out of the obtained set of measurement objects. For example, the first indication includes information about the subset. For example, the first indication may indication one or more cells, which include beams for performing a beam measurement. For example, the first indication specifies one or more beams, for which a beam measurement is to be performed.

In an exemplary implementation, a subset of measurement objects may indicate an activation and/or deactivation at beam level and/or cell level. Such activation and or deactivation is described in detail in the following sections *Cell level activation and deactivation* and *Beam level activation.*

Furthermore, the circuitry 1030, in operation, performs a beam measurement of a beam included in a measurement object out of the obtained subset of measurement objects.

For example, the subset of measurement objects may indicate one or more beams as measurement objects. A beam measurement may be performed for each beam out of said one or more beams.

For example, the subset of measurement objects may indicate one or more cells as measurement objects. A beam measurement may be performed for detected beams included in said one or more cells. Or alternatively, in said one or more cells, beam measurements may be performed for one or more beams obtained from an additional indication such as a RRC message as mentioned above. In this case, the set of measurement objects indicated by the additional indication may comprise both cells and beams.

Beam measurement is described in detail above in sections *Beam measurement* and *Layer-1-Layer-2-triggered mobility (LTM).* Moreover, the measurement is not limited to intra-frequency measurement but may be used for inter-frequency measurement. For example, this allows for different frequency ranges for serving cells and non-serving cells.

By indicating a subset of measurement objects, a reasonable number of L1 measurement objects may be configured to UE 1010 by RRC without demanding UE 1010 to measure all of L1 measurement objects. Depending on the UE status, such as location, movement, power status, or UE capability, the L1 measurement objects may be dynamically adjusted without a RRC reconfiguration.

In general, the circuitry 1030 may control the transceiver 1020 to receive and/or transmit data. This is illustrated by an arrow 1025, which represents schematically an interface between the circuitry 1030 and the transceiver 1020, over which the control is performed. For example, the circuitry 1030 may instruct 1025 the transceiver 1020 to receive said indication.

Fig. 11 shows an exemplary functional structure of the circuitry 1035 illustrated in Fig. 10. As shown, the measurement object obtaining circuitry 1035 may include a measurement object subset obtaining circuitry 1136. For example, the measurement object obtaining circuitry 1035 may include a beam measurement circuitry 1137. More specifically, circuitry 1137 may determine when and/or how perform a beam measurement, e.g. as described above in sections *Beam measurement* and *Layer-1-Layer-2-triggered mobility (LTM).*

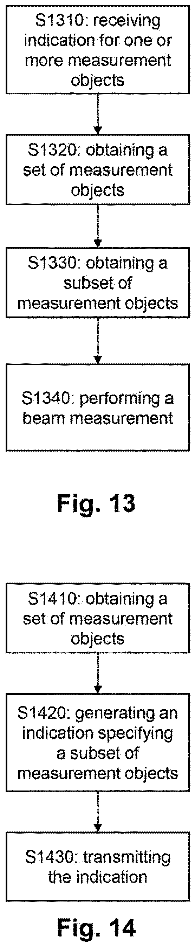

In correspondence with the above-described UE 1010, a method for receiving a configuration indication by the user equipment is provided. As shown in **Fig. 13****,** the method comprises the steps of:
- receiving S1310 a first indication specifying one or more measurement objects, wherein each measurement object includes one or more beams;
- obtaining S1320 a set of measurement objects;
- obtaining S1330 a subset of measurement objects out of the set of measurement objects based on the received first indication; and
- performing S1340 a beam measurement of a beam included in a measurement object out of the obtained subset of measurement objects.

As also shown in Fig. 10 (right-hand side), a base station 1060 is provided. The base station 1060 comprises a transmitter and a circuitry 1080. The transmitter may be included in the transceiver 1070 The circuitry 1080, in operation, obtains a set of measurement objects, wherein a measurement object out of the set of measurement objects includes one or more beams, and generates an indication specifying a subset of measurement objects out of the set of measurement objects.

The transmitter, in operation, transmits the indication specifying the subset of measurement objects.

In general, the circuitry 1080 may control the transceiver 1070 to receive and/or transmit data. This is illustrated by an arrow 1075, which represents schematically an interface between the circuitry 1080 and the transceiver 1070, over which the control is performed. For example, the circuitry 1080 may instruct 1075 the transceiver 1070 to transmit said indication.

**Fig. 12** shows an exemplary functional structure of the measurement object configuration circuitry 1085 illustrated in Fig. 10. In particular, the measurement object configuration circuitry 1085 may include a measurement object subset configuration circuitry 1236. For example, the measurement object configuration circuitry 1085 may include an indication transmission circuitry 1237. Circuitry 1237 may be responsible for transmitting the indication specifying the subset of measurement objects.

Furthermore, in correspondence with the above-described base station 1060, a communication method performed by the base station 1060 is provided. As shown in **Fig. 14****,** the method comprises the steps of:
- obtaining S1410 a set of measurement objects, wherein a measurement object out of the set of measurement objects includes one or more beams, and
- generating S1420 an indication specifying a subset of measurement objects out of the set of measurement objects,
- transmitting S1430 the indication specifying the subset of measurement objects.

The UE 1010 may comprise the transceiver 1020 and a (processing) circuitry 1030, and the network node 1060 may comprise the transceiver 1070 and a (processing) circuitry 1080. The transceiver 1010 in turn may comprise and/or function as a receiver and/or a transmitter. In this disclosure, in other words, the term "transceiver" is used for hardware and/or software components that allow the communication device 1010, or, the base station 1060 to transmit and/or receive radio signals over a wireless channel 1050, respectively. Accordingly, a transceiver may correspond to a receiver, a transmitter, or a combination of a receiver and a transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only transmits signals. Moreover, the term "circuitry" may include processing circuitry formed by one or more processors or processing units, etc. The circuitries 1030 and 1080 (or processing circuitries) may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data.

The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data that is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

It is further noted that any of the steps/operations/methods described below may be performed or controlled by the circuitry 1030 (on the UE side) and/or the circuitry 1080 (on the base station side).

In the further description, the details and embodiments apply to each of the user equipment, the base station and the methods unless explicit statement or context indicates otherwise. Moreover, it is noted that any of the steps described below may be included as code instructions in a program, which may be executed by one or more processors (e.g. the circuitry 1030 and/or the circuitry 1080).

As indicated above, the UE 1010 may receive a second indication. The second indication specifies a set of preconfigured measurement objects. In other words, the second indication includes information about one or more cells, each cell including one or more beams. The cells and/or beams may be preconfigured by one or more base stations, the network, or the like. For example, the UE 1010 may receive information about a set of measurement objects, e.g. at least one cell that includes beams or a set of beams or the like, for beam measurement.

The base station 1060 may generate such a second indication. In addition, the base station 1060 may transmit said second indication to the UE 1010.

Said second indication may be received in addition to the first indication. For example, the UE may receive the second indication before receiving the first indication. The receiving of the second indication may include receiving of a Radio Resource Control (RRC) message specifying the set of preconfigured measurement objects. In other words, the second indication may be said RRC message specifying the set of preconfigured measurement objects. However, the present invention is not limited to an RRC message. In general, any other message suitable for specifying the set of measurement objects may be used.

For a SSB beam, the RRC configuration may indicate which SSB(s) of which cell(s) are available for UE to measure. For example, the RRC configuration may provide PCI (Physical Cell ID), SSB periodicity and position in burst. For example, the RRC configuration may indicate to the UE 1010 to perform an autonomous detection with no/minimum information regarding SSB to measure. As one example, the IE *MeasObjectNR* specifies information applicable for SS/PBCH block(s) intra/inter-frequency measurements (see 3GPP TS 38.331).

For a CSI-RS beam, the RRC configuration may provide detailed RS configuration to the UE. For example, in the IE *NZP-CSI-RS-Resource,* the following configuration information is provided: RS ID, CSI-RS resource mapping, power control offset, scrambling ID, periodicity and offset, and TCI-State ID (for QCL source). Examples of the *NZP-CSI-RS-Resource* IE and the TCI-Sate IE are presented below as obtained from 3GPP TS 38.331, section 6.3.2:

### - NZP-CSI-RS-Resource

The IE *NZP-CSI-RS-Resource* is used to configure Non-Zero-Power (NZP) CSI-RS transmitted in the cell where the IE is included, which the UE may be configured to measure on (see TS 38.214 [19], clause 5.2.2.3.1). A change of configuration between periodic, semi-persistent or aperiodic for an *NZP-CSI-RS-Resource* is not supported without a release and add.

### NZP-CSI-RS-Resource information element

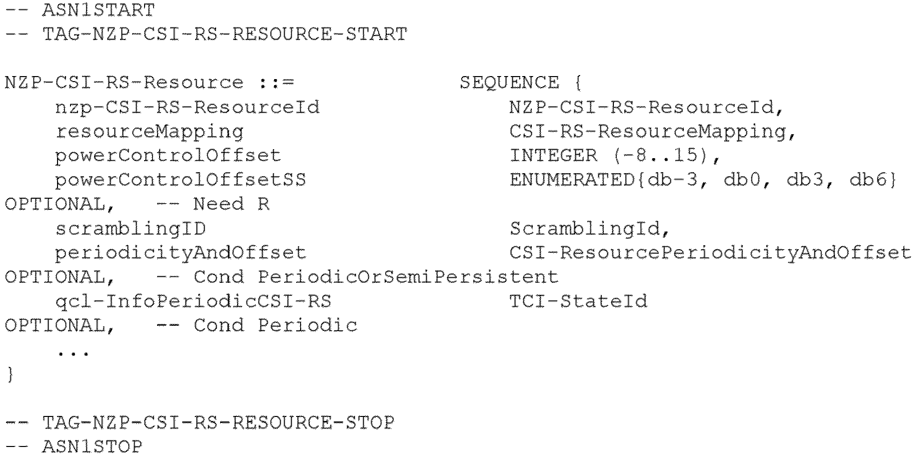

### - TCI-State

The IE *TCI-State* associates one or two DL reference signals with a corresponding quasi-colocation (QCL) type.

### TCI-State information element

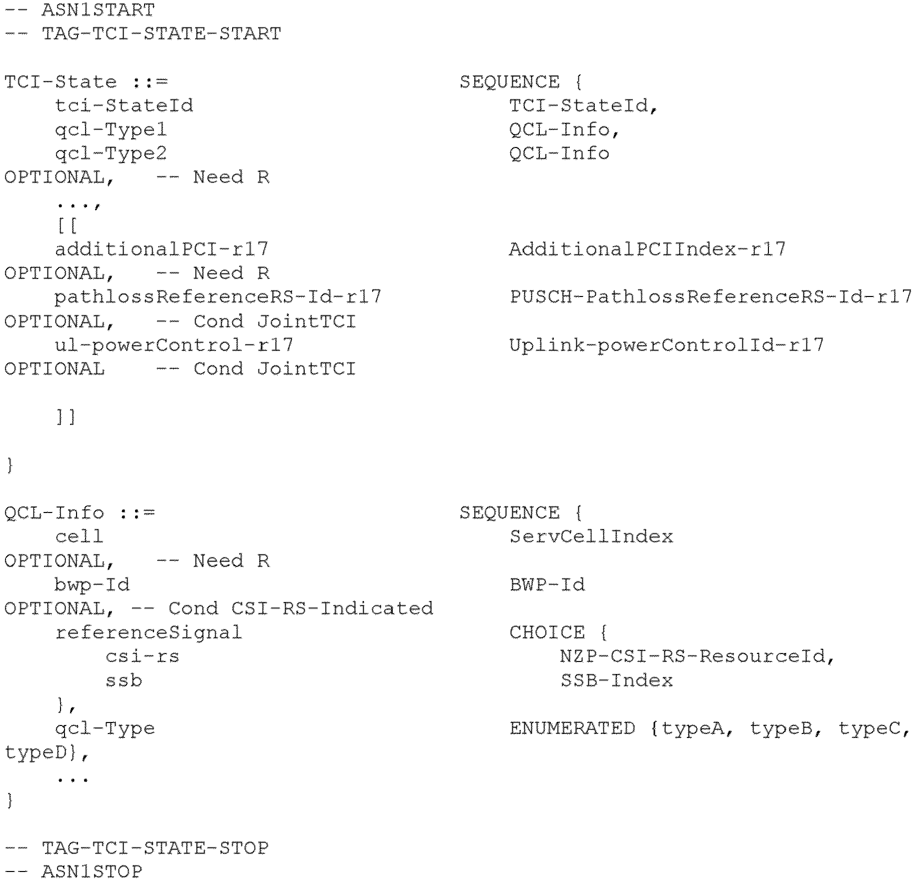

The UE 1010 may obtain the set of measurement based on the received second indication. In other words, the UE 1010 obtains information about a set of measurement objects, e.g. at least one cell that includes beams or a set of beams or the like. Said set may provide measurement objects that are available for a beam measurement.

One or more target measurement objects are selected (obtained) from the set of measurement objects by the information included in the first indication. For example, the UE may perform a beam measurement for each beam included in the set of measurement objects. For example, the UE 1010 may perform a beam measurement for one or more beams included in a subset of measurement objects. For example, the UE 1010 may perform a beam measurement for a single beam included in a measurement object indicated by the second indication.

For example, the UE 1010 may transmit information about a beam measurement to the base station 1060.

### Beam level activation

As mentioned above, the first indication specifying one or more measurement objects may indicate an activation of measurement objects at beam level.

For example, the receiving of the first indication includes receiving a beam indication specifying a set of activated beams as the one or more measurement objects. The set of activated beams may include one or more beams. In case there are two or more beams, said two or more beams may be included in a same cell or may be included in different cells. In other words, a first beam out of the two or more beams may be included in a first cell and a second beam out of the two or more beams may be included in the same first cell or may be included in a second cell, which is different from the first cell.

In the performing of the beam measurement, the circuitry, in operation, performs a measurement of an activated beam. For example, a measurement may be performed for each beam out of the activated beams. For example, a measurement may be performed for each activated beam, which fulfills an additional condition, e.g. a threshold for signaling strength such as, for example, RSRP.

In a first exemplary implementation, a measurement may be performed for each beam out of the set of activated beams. In addition, a tracking of each beam out of the set of activated beams may be performed. A tracking of a beam is described in detail in sections *Beam management and Beam adjustment.* In particular, tracking means that UE constantly performs DL synchronization to the beam, including e.g. obtaining DL timing reference, adjusting the spatial filter for DL reception such that the UE is ready for the reception of DL control and data channel using the tracked beam.

In other words, the UE 1010 may perform the measurement as well as the tracking only for activated beams. The activated beams form a subset out of a set of beams, which may be preconfigured by RRC configuration or which may be obtained by a blind detection. For example, for beams, which are not activated by the first indication, the UE may not perform a beam measurement and/or tracking.

For example, in the first exemplary implementation, a beam out of the set of activated beams is a Synchronization Signal Block, SSB, beam or a Channel State Information Reference Signal, CSI-RS, beam.

In a first example of the first exemplary implementation, one or multiple SSB beams may be activated for a cell for L1 measurement. A list of cells may be configured by RRC. The first indication, e.g. a MAC-CE message, may refer to the cells within the list of cells. If no list of cells is configured by RRC, the first indication may refer to a PCI for a cell.

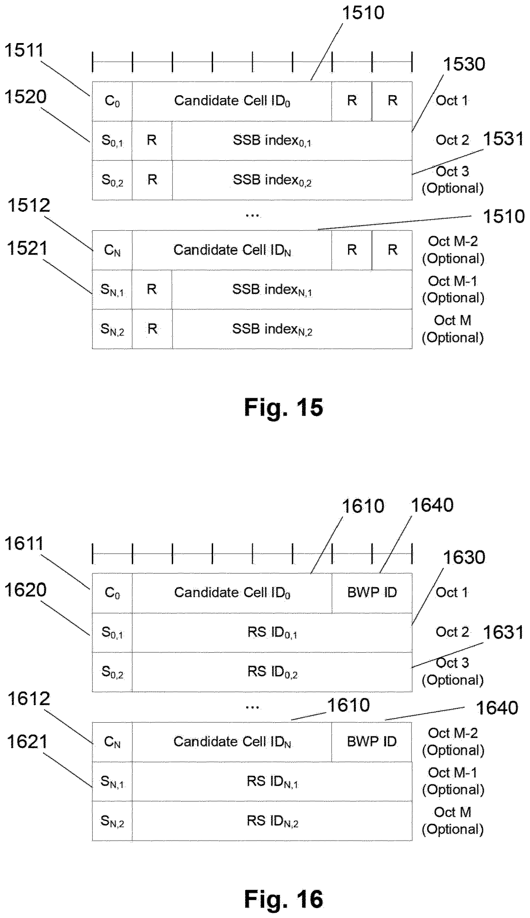

**Fig. 15** exemplarily illustrates an exemplary MAC-CE message for indicating a set of activated SSB beams. In other words, an example for a beam indication using a MAC-CE message is given in Fig. 15. The exemplary MAC-CE message includes a field for indicating a *Candidate Cell IDᵢ* 1510, where i is an integer within the range of 0 and N, and N stands for the total number of candidate cells present in the MAC-CE minus 1. Said *Candidate Cell IDᵢ* 1510 indicates the identity of candidate cell for which the activation of SSB beams applies. The length is 5 bits in this example, meaning maximal 32 cells may be indicated by the field 1510.

Moreover, the exemplary MAC-CE message may include an additional bit *Cᵢ* for each candidate cell, indicating whether for an i-th candidate cell, there is an (i+1)-th candidate cell present in the MAC-CE. For example, if this *Cᵢ* field is set to 1, the octets containing the candidate cell i+1 are present. If the field is 0, there is no further cells in this MAC CE. Fig. 15 shows a Co-field 1511 in the first octet and a *C_{N}*-field 1512 in the exemplary (M-2)-th octet.

For each candidate cell, the exemplary MAC-CE message of Fig.15 includes at least one SSB index *SSB index_{i,j},* which indicates the j-th SSB index that is activated in the i-th cell out of the (N+1) cells, wherein j is an integer within the range of 0 to M, and M stands for the total number of candidate SSB indices in an i-th cell present in the MAC-CE minus 1. For example, for the first candidate cell, the MAC-CE includes indices for two SSB beams, namely *SSB index_{0,1}* 1530 and *SSB index_{0,2}* 1531. The length for a SSB index SSB *index_{i,j},* is 6 bits in this example, meaning maximal 64 SSB beams per cell may be indicated.

Moreover, the exemplary MAC-CE message may include an additional bit *S_{i,j}* for each SSB index, indicating whether a (j+1)-th SSB beam is included in the MAC-CE for the i-th candidate cell. For example, if this *S_{i,j}* field is set to 1, the octets containing the (j+1)-th SSB beam for the i-th candidate cell are present. If the field is 0, there is no further SSB beams for said cell in this MAC CE. For example, the bit *S_{0,1}* 1520 as well as the bit *S_{N,1}* 1521 are set to 1, indicating that the respective SSB beams having indices *SSB index_{0,2}* and *SSB index_{N,2}* are present in this exemplary MAC-CE message.

In the exemplary MAC-CE message, bits denoted as "R" are reserved bits, which may have a default value of 0.

In a second example of the first exemplary implementation, one or multiple CSI-RS beams may be activated for a cell for L1 measurement. A list of cells is firstly configured by RRC and then MAC CE may refer to the cells within the list.

**Fig. 16** exemplarily illustrates a MAC-CE message for indicating a set of activated CSI-RS beams. Said exemplary MAC-CE message in Fig. 16 is similar to the MAC-CE in Fig. 15. In particular, the exemplary MAC-CE message may include a field for indicating a *Candidate Cell IDᵢ* 1610, where i is an integer within the range of 0 and N, and N stands for the total number of candidate cells present in the MAC-CE minus 1. Said *Candidate Cell IDᵢ* 1610 indicates the identity of candidate cell for which the activation of SSB beams applies. The length of *Candidate Cell IDᵢ* field is 5 bits in this example, meaning maximal 32 cells may be indicated.

In addition, the MAC-CE message for indicating the set of activated CSI-RS beams may include a BWP ID field 1640, which indicates a bandwidth part (BWP) for which the RS activation applies.

Moreover, the exemplary MAC-CE message according to Fig. 16 may include an additional bit *Cᵢ* for each candidate cell, indicating whether for an i-th candidate cell, there is an (i+1)-th candidate cell present in the MAC-CE. For example, if this *Cᵢ* field is set to 1, the octets containing the candidate cell i+1 are present. If the field is 0, there is no further cells in this MAC CE. Fig. 16 shows a Co-field 1611 in the first octet and a *C_{N}*-field 1612 in the exemplary (M-2)-th octet.

For each candidate cell, the exemplary MAC-CE message of Fig.16 may include at least one CSI-RS indication RS *ID_{i,j},* which indicates the CSI-RS ID that is activated in the i-th cell, wherein j is an integer within the range of 0 to M, and M stands for the total number of candidate CSI-RS indications in an i-th cell present in the MAC-CE minus 1. For example, for the first candidate cell, the MAC-CE may include indices for two CSI-RS beams, namely RS *ID_{0,1}* 1630 and RS *ID_{0,2}* 1631. The length of each CSI-RS indication RS *ID_{i,j}* is 7 bits in this example, meaning maximal 128 CSI-RS beams per cell may be indicated.

Moreover, the exemplary MAC-CE message may include an additional bit *S_{i,j}* for each CSI-RS ID, indicating whether a (j+1)-th RS beam is included in the MAC-CE for the i-th candidate cell. For example, if this *S_{i,j}* field is set to 1, the octets containing the (j+1)-th RS beam for the i-th candidate cell are present. If the field is 0, there is no further RS beams for said cell in this MAC CE. For example, the bit *S_{0,1}* 1520 as well as the bit *S_{N,1}* 1621 are set to 1, indicating that the respective RS beams having indices RS *ID_{0,2}* and RS *ID_{N,2}* are present in this exemplary MAC-CE message.

Analogous as in Fig. 15, bits denoted as "R" are reserved bits, which may have a default value of 0.

In a second exemplary implementation, the activated beams may form a subset out of a set of beams, which is obtained by the UE 1010. In particular, the UE 1010 may obtain a set of predetermined beams. Said set of predetermined beams may be determined by receiving the second indication from the base station 1060, e.g. receiving a RRC message, including the preconfigured measurement objects as set of predetermined beams. Said set of predetermined beams may be determined by a blind detection performed by the UE 1010.

In the second exemplary implementation, the performing of the beam measurement may include performing a measurement of each beam out of the set of predetermined beams. Moreover, the performing of the beam measurement may include performing a tracking of each beam out of the set of activated beams.

In other words, the UE 1010 may maintain (perform) tracking of the activated SSB beams. In addition, the UE 1010 may measure the beams based on the RRC configuration, which might include beams that are *not* activated. By measuring and reporting beams that are not activated, UE (and hence gNB, based on the UE reporting) may discover new suitable beams for communication.

For example, in the second exemplary implementation, a beam out of the set of activated beams may be a SSB beam. An example for a first indication specifying a subset of activated SSB beams, e.g. a MAC-CE message, is given in Fig. 15 and the corresponding detailed explanation above.

### Cell level activation and deactivation

As mentioned above, the first indication specifying one or more measurement objects may indicate an activation of measurement objects at cell level.

In a third exemplary implementation, the receiving of the first indication includes receiving a cell indication specifying a set of cells as the one or more measurement objects. The set of cells may include one or more cells.

The cell indication may specify for a cell out of the set of cells, whether said cell is *deactivated.* The UE 1010, in particular the circuitry, may perform a measurement for a beam included in a cell that is not deactivated.

In other words, a cell may be deactivated for L1 measurement. A UE is not required to perform L1 measurement on any beams of the deactivated cells.

For a cell that is not deactivated for L1 measurement, the UE 1010 may measure SSB beams based on a RRC configuration, e.g. a set of indicated SSBs, or blindly detected SSBs. The set of indicated SSBs may be received in a RRC message transmitted by a base station 1060.

If there are any preconfigured CSI-RS beams, the UE 1010 may measure said CSI-RS beams based on the RRC configuration.

For example, a list of cells may be configured by a RRC message and then a MAC CE message is used to deactivate the cells within the list.

An example for a list of cells is the LTM candidate cell list. However, the present invention is not limited to said LTM candidate cell list. In general, any cell list, e.g. configured by RRC, may be used. In case such a list is used, a logic cell ID referring to said list may be used in MAC CE. If no cell list is configured by RRC before MAC CE cell deactivation, PCI (physical cell ID) may be used in the MAC CE.

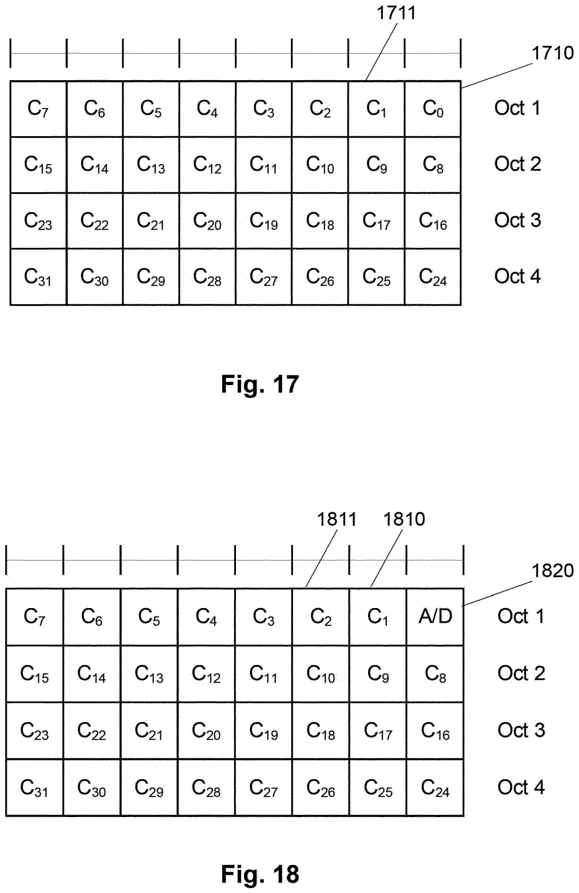

An example for a cell indication using a MAC-CE message for deactivation is given in Fig. 17. Each bit within the MAC-CE message corresponds to a cell within a list. In other words, each bit corresponds to a configured candidate cell for L1 measurement. The exemplary MAC-CE message supports up to 32 cells. For a cell, the value of the Cᵢ field is either 1 or 0.

For example, in the third exemplary implementation, value 0 indicates that the cell is deactivated, and value 1 indicates the cell is not deactivated. For example, the C₀ bit 1710 (or C₀ field 1710) may indicate for a first cell within a list, and the value of C₀ bit 1710 may indicate whether said first cell is deactivated. Similarly, the C₁ bit 1711 may indicate for a second cell within a list, and the value of C₁ bit 1711 may indicate whether said second cell is deactivated.

Alternatively, multiple cells may be grouped into a group of cells, and each bit in the exemplary MAC-CE message of Fig. 17 may indicate the deactivation of one group of cells.

In a fourth exemplary implementation, similar to the third exemplary implementation, the receiving of the first indication includes receiving a cell indication specifying a set of cells as the one or more measurement objects. The set of cells may include one or more cells.

The cell indication may specify in the fourth exemplary implementation, for a cell out of the set of cells, whether said cell is *activated.* The UE 1010, in particular the circuitry, may perform a measurement for a beam included in a cell that is activated. In other words, for a beam included in an activated cell, the circuitry, in operation, performs a measurement of said beam included in the activated cell.

In other words, a cell may be activated for L1 measurement. A UE is not required to perform L1 measurement on any beams of cells that are not activated.

For a cell that is activated for L1 measurement, the UE 1010 may measure SSB beams based on a RRC configuration, e.g. a set of indicated SSBs, or blindly detected SSBs. The set of indicated SSBs may be received in a RRC message transmitted by a base station 1060.

Further, for a cell that is activated for L1 measurement, the UE 1010 may maintain tracking of at least one SSB beam for the activated cell. The selection of the beam for tracking may be performed by the UE itself, e.g. based on results of the beam measurement.

If there are any preconfigured CSI-RS beams, the UE 1010 may measure said CSI-RS beams based on the RRC configuration for an activated cell.

Similar as in the third exemplary implementation, a list of cells may be configured by a RRC message in the fourth exemplary implementation. A MAC-CE message may be used to activate the cells within the list.

Fig. 17 also illustrates an exemplary MAC-CE message for the fourth exemplary implementation. In particular, each bit within the MAC-CE message may correspond to a cell within a list. The exemplary MAC-CE message supports up to 32 cells. For a cell, the value of the Cᵢ field is either 1 or 0, where i is an integer within the range of 0 and N, and N stands for the total number of cells supported in the MAC-CE minus 1(in this example, N=31).

For example, in the fourth exemplary implementation, value 1 indicates that the cell is activated, and value 0 indicates the cell is not activated. For example, the C₀ bit 1710 may indicate for a first cell within a list whether said first cell is activated. The C₁ bit 1711 may indicate for a second cell within a list whether said second cell is activated.

Alternatively, multiple cells may be grouped into a group of cells, and each bit in the exemplary MAC-CE message of Fig. 17 may indicate the activation of one group of cells.

In a fifth exemplary implementation, which is based on the third as well as the fourth exemplary implementation, the cell indication further includes a status indication. Such a status indication may be a field in a MAC-CE message.

For example, a cell may have the status
- activated
- deactivated, or
- neither activated nor deactivated.

For a first value of the status indication, the cell indication may specify for each cell out of the set of cells, whether said cell is deactivated. For a second value of the status indication, the cell indication may specify for each cell out of the set of cells, whether said cell is activated.

For example, an exemplary MAC-CE message as illustrated in Fig. 18 may include a bit A/D 1820 (or a A/D field). Said bit A/D 1820 may indicate whether to activate or deactivate the indicated cells. For example, a value of 1 for the bit A/D 1820 corresponds to an activation of the cells indicated, and a value of 0 corresponds to a deactivation of the cells indicated in said MAC-CE message.

Each bit Cᵢ (or Cᵢ field) corresponds to a configured candidate cell for L1 measurement. For a cell, the Cᵢ field is either 1 or 0, where i is an integer within the range of 1 and N, and N stands for the total number of cells supported in the MAC-CE(in this example, N=31). For example for cell activation (i.e. A/D=1), the C₁ bit 1810 may indicate for a first cell within a list whether said first cell is activated. The C₂ bit 1811 may indicate for a second cell within a list whether said second cell is activated.

For example for cell deactivation (i.e. A/D=0), the C₁ bit 1810 may indicate for a first cell within a list whether said first cell is deactivated. The C₂ bit 1811 may indicate for a second cell within a list whether said second cell is deactivated.

The exemplary MAC-CE message of Fig. 18 supports up to 31 cells.

If A/D indicates activation (i.e., A/D=1), Cᵢ = 1 indicates that the cell is activated and Ci=0 indicates that the cell is not activated. If A/D indicates deactivation (i.e., A/D=0), Cᵢ = 1 indicates that the cell is deactivated and Cᵢ=0 indicates that the cell is not deactivated.

An indication for a cell that is neither activated nor deactivated may include in a first MAC-CE with A/D=1 (i.e. activation), a Cᵢ = 0 for said cell and in a second MAC-CE with A/D=0 (i.e. deactivation), a Cᵢ = 0 for said cell.

Alternatively, multiple cells may be grouped into a group of cells, and each bit Cᵢ in the exemplary MAC-CE message of Fig. 18 may indicate the activation or deactivation of one group of cells.

Cell activation and deactivation may be controlled separately, e.g. by two MAC CEs, which include said status indication.

In the fifth exemplary embodiment, in the performing of the beam measurement of a beam, the UE, in particular, the circuity in operation may perform a measurement of said beam for a cell that is not deactivated. If a cell is deactivated for L1 measurement, UE is not required to measure any beams of the cell.

If said beam is included in an activated cell, a measurement of said beam as well as a tracking of said beam may be performed. For example, if a cell is activated for L1 measurement, UE measures SSB beams (and CSI-RS beams if configured) based on RRC configuration.

If only one SSB beam of an activated cell is configured for UE to measure in the RRC configuration, UE may maintain tracking of such SSB beam.

If more than one SSB beam of an activated cell is configured for the UE to measure in the RRC configuration, or if the RRC configuration indicates that the UE may detect SSB beams autonomously, the UE may maintain tracking of at least one SSB beam for the activated cell. The selection of the beam for tracking may be performed by the UE, e.g. based on results of the beam measurement.

If said beam is included in a cell that is neither activated nor deactivated, a measurement of said beam may be performed. For example, if a cell is neither activated nor deactivated, the UE measures SSBs (and CSI-RS beams if configured) based on RRC configuration. The UE may not maintain tracking of any SSB beam in a not activated cell.

In other words, the circuity in operation performs a measurement and a tracking of a beam included in an activated cell, and performs a measurement of a beam included in a cell that is neither activated nor deactivated.

### Initial state

Once a candidate cell is configured to the UE, an initial state associated with the configured cell may be determined. The initial state may be one of the following: activated, deactivated, neither activated nor deactivated. To be flexible, the initial state may be configured to the UE separately for each candidate cell. Such configuration may be, e.g. included in the candidate cell configuration. Or alternatively, the initial state may be separately configured and applied to all the configured cells of the UE. Another alternative approach is that the standard specifications, such as 3GPP technical specifications, specify an initial state, to reduce the additional configuration signaling overhead.

### Cell and beam level activation

In addition to the cell level (de)activation as described above, for example, according to any of the third to fifth exemplary implementation, a beam level activation may be performed.

For example, the receiving of the first indication includes receiving, in addition to the cell indication, a beam indication, specifying a set of activated beams as one or more measurement objects. The set of activated beams may include one or more beams. Such a beam indication may be any of the examples or exemplary implementations as described above in section *Beam level activation.*

If cell level deactivation is indicated, beam level activation may be applied to the cells that are not deactivated. If cell level activation is indicated, beam level activation may be applied to the cells that are activated. If cell level activation and deactivation are both indicated, beam level activation may be applied to the cells that are not deactivated.

If a beam is included in a cell that is not deactivated or if said beam is included in a cell that is activated, a measurement may be performed for said beam. In the performing of the measurement of said beam, a tracking of said beam is performed, if said beam is an activated beam.

If a beam or a set of beams is/are activated in a cell that is activated, UE is not required to maintain tracking of a self-selected beam other than the activated beam(s) for the cell anymore.

### Beam selection for measurement

In order to further reduce the UE measurement effort, one or more beams may be selected according to one or more rules.

For example, the UE 1010, in particular the circuitry in operation, may obtain threshold for at least one of a measurement object or a serving cell. Such a threshold may be, for example, a Reference Signal Received Power, RSRP, threshold or a Reference Signal Received Quality, RSRQ, threshold or a Signal-to-Noise and Interference Ratio, SINR, threshold. Such a threshold may refer to a measurement object, such as a beam, a set of beams, a cell, or the like.

A beam measurement may performed if the measurement object has a RSRP value, a RSRQ value, or a SINR value above the corresponding RSRP, RSRQ, or SINR threshold for the measurement object. Alternatively or in addition, a beam measurement may be performed if a RSRP value, a RSRP value or a SINR value of the serving cell is below the corresponding RSRP, RSRQ, or SINR threshold for the serving cell.

For example, a beam threshold of L3 RSRP applicable to a beam of a non-serving cell may be provided to the UE, for example by a RRC configuration. The UE may perform a L1 measurement for a beam, e.g. a SSB beam or a CSI-RS beam, that is beyond the threshold. Such a L3 measurement may correspond to long-term measurement results, e.g. an average over time.

For example, a cell threshold of L3 RSRP applicable to a non-serving cell may be provided to the UE, for example by a RRC configuration. The UE may perform a L1 measurement for a beam, e.g. a SSB beam or a CSI-RS beam, included in said cell that is beyond the threshold.

For example, a cell threshold of L3 RSRP applicable to a serving cell is provided to the UE, for example by a RRC configuration. The UE performs L1 measurement for a beam, e.g. a SSB beam or a CSI-RS beam, if the serving cell L3 RSRP value is lower than the threshold.

Any of the above-mentioned thresholds may be an absolute threshold or relative threshold (e.g. between serving and non-serving cells, or between best and worst beams in terms of highest/lowest value of RSRP, RSRP, or SINR).

For example, such a threshold may be indicated using the parameter ThresholdNR:

```
ThresholdNR ::= SEQUENCE{
       thresholdRSRP RSRP-Range OPTIONAL, -- Need R
       thresholdRSRQ RSRQ-Range OPTIONAL, -- Need R
       thresholdSINR SINR-Range OPTIONAL -- Need R
 }
```

ThresholdNR is defined in 3GPP TS 38.331 is to consolidate a subset of qualified beams to derive the cell measurement result. It may be reused to indicate whether L1 measurement should be performed or not (in either cell or beam level).

For example the UE, in particular the circuitry in operation may start a timer when receiving the first indication. In other words, the timer starts after UE receives the activation/deactivation command. Such a timer may be preconfigured by a received configuration such as a RRC configuration, by a standard, or the like. After the timer reaches a preconfigured time threshold, the activation/deactivation status of the one or more measurement objects is reset to a default value (e.g. initial state). In other words, after the timer expires, a status of a measurement object indicated by the first indication is set to a default value. Such a default value may include, for example, a deactivation for non-serving cells, a non-activation of beams in non-serving cells (thus no tracking of beams in non-serving cells). Such a default value may depend on the number of measurement objects, which are included in the set of (e.g. RRC configured) measurement objects.

For example, if a cell switch does not happen for a time duration - in other words, the UE may be static (i.e. not moving) - L1 measurement may be stopped in order to save UE power.

After a cell switch, the activation/deactivation status of the one or more measurement objects may be maintained for non-serving cells. Alternatively, the status of non-serving cells may be reset to a default value. The previous serving cell, on the other hand, may remain activated or not deactivated, because UE might still be within the coverage of the previous serving cell. The chance that UE may need to be switch back to the previous serving cell is not negligible.

The activation command, i.e. the receiving of the first indication, may be used to indicate a change of periodicity of a beam, e.g. a SSB beam. For example, when a cell or SSB beam is activated, a shorter periodicity applies. When a cell or SSB beam is deactivated, a longer periodicity applies. This provides the opportunity for cell DTX (Discontinuous Transmission) for network energy saving.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, a user equipment (UE) is provided. The UE comprises a receiver and a circuitry. The receiver in operation: receives a first indication specifying one or more measurement objects, wherein each measurement object includes one or more beams. The circuitry in operation: obtains a set of measurement objects, wherein the set of measurement objects includes the one or more measurement objects; obtains a subset of measurement objects out of the set of measurement objects based on the received first indication; and performs a beam measurement of a beam included in a measurement object out of the obtained subset of measurement objects.

According to a second aspect provided in addition to the first aspect, before receiving the first indication, the receiver, in operation, receives a second indication specifying a set of preconfigured measurement objects; and the obtaining of the set of measurement objects includes obtaining the set of measurement objects based on the received second indication.

According to a third aspect provided in addition to one of the first to second aspects, a measurement object is any one of
- a cell including one or more beams,
- a set of beams, and
- a beam.

According to a fourth aspect provided in addition to one of the first to third aspects, the receiving of the first indication includes receiving a Medium Access Control, MAC, Control Element, CE, message specifying one or more measurement objects.

According to a fifth aspect provided in addition to one of the second to third aspects, the receiving of the second indication includes receiving of a Radio Resource Control, RRC, message specifying the set of preconfigured measurement objects.

According to a sixth aspect provided in addition to one of the first to fifth aspects, the receiving of the first indication includes receiving a beam indication, which specifies a set of activated beams as the one or more measurement objects, the set of activated beams including one or more beams, and in the performing of the beam measurement, the circuitry, in operation, performs a measurement of an activated beam, which is included in the set of activated beams.

According to a seventh aspect provided in addition to the sixth aspect, in the performing of the beam measurement, the circuitry, in operation, performs a measurement of each beam out of the set of activated beams, and performs a tracking of each beam out of the set of activated beams.

According to an eighth aspect provided in addition to the seventh aspect, a beam out of the set of activated beams is a Synchronization Signal Block, SSB, beam or a Channel State Information Reference Signal, CSI-RS, beam.

According to a ninth aspect provided in addition to the sixth aspect, in the obtaining of the set of measurement objects, the circuitry, in operation, obtains a set of predetermined beams, wherein the set of predetermined beams is included in the set of measurement objects, in the performing of the beam measurement, the circuitry, in operation, performs a measurement of each beam out of the set of predetermined beams, and performs a tracking of each beam out of the set of activated beams.

According to a tenth aspect provided in addition to the ninth aspect, a beam out of the set of activated beams is a SSB beam.

According to a eleventh aspect provided in addition to one of the first to fifth aspects, the receiving of the first indication includes receiving a cell indication, which specifies a set of cells as the one or more measurement objects, the set of cells including one or more cells, the cell indication specifies for a cell out of the set of cells, whether said cell is deactivated, and for a beam included in a cell that is not deactivated, in the performing of the beam measurement, the circuitry, in operation, performs a measurement of said beam included in the cell that is not deactivated.

According to a twelfth aspect provided in addition to one of the first to fifth aspects, the receiving of the first indication includes receiving a cell indication, which specifies a set of cells as the one or more measurement objects, the set of cells including one or more cells, the cell indication specifies for a cell out of the set of cells, whether said cell is activated, and for a beam included in an activated cell, in the performing of the beam measurement, the circuitry, in operation, performs a measurement of said beam included in the activated cell.

According to a thirteenth aspect provided in addition to one of the eleventh or twelfth aspects, the cell indication further includes a status indication, wherein for a first value of the status indication, the cell indication specifies for each cell out of the set of cells, whether said cell is deactivated, for a second value of the status indication, the cell indication specifies for each cell out of the set of cells, whether said cell is activated.

According to a fourteenth aspect provided in addition to the thirteenth aspect, in the performing of the beam measurement of a beam, the circuity in operation performs a measurement and a tracking of a beam included in an activated cell, and performs a measurement of a beam included in a cell that is neither activated nor deactivated.

According to a fifteenth aspect provided in addition to one of the eleventh to fourteenth aspects, the receiving of the first indication includes receiving, in addition to the cell indication, a beam indication, which specifies a set of activated beams as one or more measurement objects, the set of activated beams including one or more beams, in the performing of the measurement of said beam, the circuitry, in operation, performs a tracking if said beam is an activated beam

According to a sixteenth aspect provided in addition to one of the eleventh to fifteenth aspects, the circuitry in operation obtains a Reference Signal Received Power, RSRP threshold, or a Reference Signal Received Quality, RSRQ threshold, or a Signal-to-Noise and Interference Ratio, SINR threshold for at least one of a measurement object or a serving cell, and the beam measurement is performed if the measurement object has a RSRP value, a RSRQ value, or a SINR value above the corresponding RSRP, RSRQ, or SINR threshold for the measurement object, or if a RSRP value, a RSRP value or a SINR value of the serving cell is below the corresponding RSRP, RSRQ, or SINR threshold for the serving cell.

According to a seventeenth aspect provided in addition to one of the first to sixteenth aspects, the circuitry, in operation, further starts a preconfigured timer when receiving the first indication, after the timer expires, sets a status of a measurement object indicated by the first indication to a default value.

According to an eighteenth aspect provided in addition to one of the first to seventeenth aspects, wherein the receiving of the first indication further indicates a change of a periodicity of a beam included in a measurement object out of the subset of measurement objects.

According to a nineteenth aspect, a base station is provided. The base station comprises a transmitter and a circuitry. The circuity in operation: obtains a set of measurement objects, wherein a measurement object out of the set of measurement objects includes one or more beams, and generates an indication specifying a subset of measurement objects out of the set of measurement objects. The transmitter, in operation: transmits the indication specifying the subset of measurement objects.

According to a twentieth aspect a method for performing a beam measurement by a user equipment, UE, is provided. The method comprises: receiving a first indication specifying one or more measurement objects, wherein each measurement object includes one or more beams; obtaining a set of measurement objects, wherein the set of measurement objects includes the one or more measurement objects; obtaining a subset of measurement objects out of the set of measurement objects based on the received first indication; and performing a beam measurement of a beam included in a measurement object out of the obtained subset of measurement objects.

According to a twenty-first aspect a method for transmitting a configuration indication by a base station is provided. The method comprises: obtaining a set of measurement objects, wherein a measurement object out of the set of measurement objects includes one or more beams, generating an indication specifying a subset of measurement objects out of the set of measurement objects; and transmitting the indication specifying the subset of measurement objects.

According to a twenty-second, an integrated circuit is provided, which, in operation, controls a process of a user equipment, the process comprising the following steps performed by the user equipment:
- receiving a first indication specifying one or more measurement objects, wherein each measurement object includes one or more beams; and
- obtaining a set of measurement objects, wherein the set of measurement objects includes the one or more measurement objects;
- obtaining a subset of measurement objects out of the set of measurement objects based on the received first indication; and
- performing a beam measurement of a beam included in a measurement object out of the obtained subset of measurement objects.

According to a twenty-third aspect, an integrated circuit is provided, which, in operation, controls a process of a base station, the process comprising the following steps performed by the base station:
- obtaining a set of measurement objects, wherein a measurement object out of the set of measurement objects includes one or more beams,
- generating an indication specifying a subset of measurement objects out of the set of measurement objects, and
- transmitting the indication specifying the subset of measurement objects.

According to a twenty-fourth aspect, a program stored on a storage medium and including code instructions, which, when executed on one or more processors of a user equipment, cause the one or more processors to execute the following steps:
- receiving a first indication specifying one or more measurement objects, wherein each measurement object includes one or more beams;
- obtaining a set of measurement objects, wherein the set of measurement objects includes the one or more measurement objects;
- obtaining a subset of measurement objects out of the set of measurement objects based on the received first indication; and
- performing a beam measurement of a beam included in a measurement object out of the obtained subset of measurement objects.

According to a twenty-fifth aspect, a program stored on a storage medium and including code instructions, which, when executed on one or more processors of a base station, cause the one or more processors to execute the following steps:
- obtaining a set of measurement objects, wherein a measurement object out of the set of measurement objects includes one or more beams,
- generating an indication specifying a subset of measurement objects out of the set of measurement objects, and
- transmitting the indication specifying the subset of measurement objects.

Summarizing, the disclosure relates to a user equipment, a base station device, and respective methods for a user equipment and a base station. More specifically, the user equipment comprises a receiver and circuitry. The receiver, in operation, receives a first indication specifying one or more measurement objects, wherein each measurement object includes one or more beams. The circuitry, in operation, obtains a set of measurement objects, wherein the set of measurement objects includes the one or more measurement objects, obtains a subset of measurement objects out of the set of measurement objects based on the received first indication, and performs a beam measurement of a beam included in a measurement object out of the obtained subset of measurement objects.

## Claims

1. A user equipment, UE, comprising:
a receiver which in operation:
receives a first indication specifying one or more measurement objects, wherein each measurement object includes one or more beams; and
circuitry which in operation:
obtains a set of measurement objects, wherein the set of measurement objects includes the one or more measurement objects;
obtains a subset of measurement objects out of the set of measurement objects based on the received first indication; and
performs a beam measurement of a beam included in a measurement object out of the obtained subset of measurement objects.

2. The UE according to claim 1, wherein
before receiving the first indication, the receiver, in operation, receives a second indication specifying a set of preconfigured measurement objects; and
the obtaining of the set of measurement objects includes obtaining the set of measurement objects based on the received second indication.

3. The UE according to claim 1 or 2, wherein
a measurement object is any one of
- a cell including one or more beams,
- a set of beams, and
- a beam,
and optionally
the receiving of the first indication includes receiving a Medium Access Control, MAC, Control Element, CE, message specifying one or more measurement objects, and/or
the receiving of the second indication includes receiving of a Radio Resource Control, RRC, message specifying the set of preconfigured measurement objects.

4. The UE according to any one of the claims 1 to 3, wherein
the receiving of the first indication includes receiving a beam indication, which specifies a set of activated beams as the one or more measurement objects, the set of activated beams including one or more beams, and
in the performing of the beam measurement, the circuitry, in operation, performs a measurement of an activated beam, which is included in the set of activated beams.

5. The UE according to claim 4, wherein
in the performing of the beam measurement, the circuitry, in operation,
performs a measurement of each beam out of the set of activated beams, and
performs a tracking of each beam out of the set of activated beams.

6. The UE according to claim 5, wherein
a beam out of the set of activated beams is a Synchronization Signal Block, SSB, beam or a Channel State Information Reference Signal, CSI-RS, beam.

7. The UE according to claim 4, wherein
in the obtaining of the set of measurement objects, the circuitry, in operation, obtains a set of predetermined beams, wherein the set of predetermined beams is included in the set of measurement objects,
in the performing of the beam measurement, the circuitry, in operation,
performs a measurement of each beam out of the set of predetermined beams, and
performs a tracking of each beam out of the set of activated beams.

8. The UE according to any one of claims 1 to 3, wherein
the receiving of the first indication includes receiving a cell indication, which specifies a set of cells as the one or more measurement objects, the set of cells including one or more cells,
the cell indication specifies for a cell out of the set of cells, whether said cell is deactivated, and
for a beam included in a cell that is not deactivated, in the performing of the beam measurement, the circuitry, in operation, performs a measurement of said beam included in the cell that is not deactivated.

9. The UE according to any one of claims 1 to 3, wherein
the receiving of the first indication includes receiving a cell indication, which specifies a set of cells as the one or more measurement objects, the set of cells including one or more cells,
the cell indication specifies for a cell out of the set of cells, whether said cell is activated, and
for a beam included in an activated cell, in the performing of the beam measurement, the circuitry, in operation, performs a measurement of said beam included in the activated cell.

10. The UE according to claim 8 or 9, wherein
the cell indication further includes a status indication, wherein
for a first value of the status indication, the cell indication specifies for each cell out of the set of cells, whether said cell is deactivated,
for a second value of the status indication, the cell indication specifies for each cell out of the set of cells, whether said cell is activated,
and optionally, in the performing of the beam measurement of a beam, the circuity in operation
performs a measurement and a tracking of a beam included in an activated cell, and
performs a measurement of a beam included in a cell that is neither activated nor deactivated.

11. The UE according to any one of the claims 8 to 10, wherein
the receiving of the first indication includes receiving, in addition to the cell indication, a beam indication, which specifies a set of activated beams as one or more measurement objects, the set of activated beams including one or more beams,
in the performing of the measurement of said beam, the circuitry, in operation, performs a tracking if said beam is an activated beam

12. The UE according to any one of the claims 8 to 11, wherein
the circuitry in operation obtains a Reference Signal Received Power, RSRP threshold, or a Reference Signal Received Quality, RSRQ threshold, or a Signal-to-Noise and Interference Ratio, SINR threshold for at least one of a measurement object or a serving cell, and
the beam measurement is performed
- if the measurement object has a RSRP value, a RSRQ value, or a SINR value above the corresponding RSRP, RSRQ, or SINR threshold for the measurement object, or
- if a RSRP value, a RSRP value or a SINR value of the serving cell is below the corresponding RSRP, RSRQ, or SINR threshold for the serving cell.

13. A base station comprising:
circuitry which, in operation:
obtains a set of measurement objects, wherein a measurement object out of the set of measurement objects includes one or more beams; and
generates an indication specifying a subset of measurement objects out of the set of measurement objects;
a transmitter which, in operation:
transmits the indication specifying the subset of measurement objects.

14. A method for performing a beam measurement by a user equipment, UE, the method comprising:
receiving a first indication specifying one or more measurement objects, wherein each measurement object includes one or more beams;
obtaining a set of measurement objects, wherein the set of measurement objects includes the one or more measurement objects;
obtaining a subset of measurement objects out of the set of measurement objects based on the received first indication; and
performing a beam measurement of a beam included in a measurement object out of the obtained subset of measurement objects.

15. A method for transmitting a configuration indication by a base station, the method comprising:
obtaining a set of measurement objects, wherein a measurement object out of the set of measurement objects includes one or more beams;
generating an indication specifying a subset of measurement objects out of the set of measurement objects; and
transmitting the indication specifying the subset of measurement objects.
